# FASCICULE DE BREVET EUROPEEN

(11) **EP 0 780 099 B1**
(45) Date de publication et mention de la délivrance du brevet: **12.06.2002**
(21) Numéro de dépôt: 96105242.0
(22) Date de dépôt: 02.04.1996
(51) Int. Cl.: A61C 5/02

(54) **Jeu d'instruments pour l'alésage des canaux radiculaires dentaires**
Instrumentensatz zur Bearbeitung von Zahnwurzelkanälen
Set of instruments for preparing dental root canals

(30) Priorité: 20.12.1995 CH 360395
(43) Date de publication de la demande: 25.06.1997
(73) Titulaire: MAILLEFER INSTRUMENTS S.A., CH-1338 Ballaigues (CH)
(72) Inventeur: Maillefer, Pierre-Luc, 1338 Ballaigues (CH); Aeby, Francois, 1442 Montagny-Pres-Yverdon (CH)
(74) Mandataire: Micheli & Cie

(56) Documents cités:
- EP-A- 0 501 255
- EP-A- 0 684 019
- US-A- 5 380 200

## Description

La présente invention a pour objet un jeu d'instruments pour l'alésage des canaux radiculaires dentaires que l'on fait passer successivement dans lesdits canaux.

L'alésage des canaux radiculaires dentaires comporte une première étape, dite de cathétérisme, qui consiste à engager dans le canal radiculaire un instrument très fin, jusqu'au foramen apical. Cette opération est toujours réalisée manuellement.

L'élargissement du canal radiculaire s'effectue en plusieurs opérations qui peuvent être réalisées soit manuellement, soit au moyen d'instruments entraînés mécaniquement. Pour cette seconde étape, deux méthodes peuvent être utilisées : la première, dite "step back", consiste à faire passer dans le canal une succession d'instruments dont le diamètre va en croissant, en réduisant la longueur alésée à chaque augmentation de diamètre. Ce mode de faire est relativement long et ne permet pas au praticien d'observer, dans la mesure du possible, le travail effectué. La seconde méthode, dite "crown-down", consiste à ouvrir, dans un premier temps, la partie coronaire de la dent puis à pénétrer, au moyen d'une série d'instruments de plus en plus fins, jusqu'à la zone apicale.

Les jeux d'instruments connus permettant la mise en ouvre de ce processus qui sont montés le plus généralement sur un contre-angle tournant à faible vitesse (250 à 500 t/min.) et qui sont réalisés, le plus souvent, en un alliage nickel-titane, appartiennent à quatre familles :

La première famille comprend une série d'instruments constitués d'une partie coupante courte, suivie d'un col fin et flexible, lui-même raccordé à un manche qui se fixe dans une pièce à main assurant l'entraînement mécanique de l'instrument. Le diamètre de la partie active croît en progression arithmétique, l'intervalle entre deux numéros étant de 0,025 mm.

Une deuxième famille se compose d'instruments dont la partie active, d'une longueur de 16 mm, possède une conicité de 0,04 mm par millimètre de longueur. Cette partie active est directement suivie d'une portion cylindrique servant de raccord au manche de l'instrument. La progression du diamètre à la pointe de l'extrémité active est de 29 % entre chaque numéro.

Une troisième famille comprend des instruments de longueur active de 16 mm et d'enveloppe conique, ces instruments ayant tous le même diamètre à leur extrémité; leur conicité augmente de 0,05 mm à chaque numéro.

Une dernière famille comprend des jeux d'instruments tels que décrits dans le document EP 0 501 255. Ces jeux d'instruments comportent des instruments dont les diamètres terminaux sont différents mais dont au moins deux présentent le même diamètre terminal et des tiges de conicité différentes.

Le but de l'invention est de permettre une nouvelle méthode d'alésage des canaux radiculaires dentaires, après l'étape de cathétérisme, et de fournir de nouveaux instruments permettant la mise en oeuvre de cette méthode, laquelle est à la fois plus sûre et plus efficace que les méthodes connues. Cette nouvelle méthode est également plus rapide et ne nécessite pas autant d'instruments que les méthodes connues.

En outre, ces instruments réalisent des alésages plus réguliers, à paroi continue ce qui n'est pas toujours le cas avec les instruments connus.

Ces buts sont atteints grâce aux moyens définis dans la revendication 1.

Le dessin représente, à titre d'exemple, une forme d'exécution de l'objet de l'invention.
La figure 1 est une vue en élévation d'un instrument pour l'alésage des canaux radiculaires dentaires.
La fig. 2 représente le profil de cinq instruments pour l'alésage des canaux radiculaires dentaires appartenant à un jeu de tels instruments, et
La fig. 3 représente le profil superposé des cinq instruments de la fig. 2.

Dans ces deux dernières figures, le diamètre des instruments a été exagéré par rapport à leur longueur, de façon à rendre mieux visibles les variations de conicité des instruments.

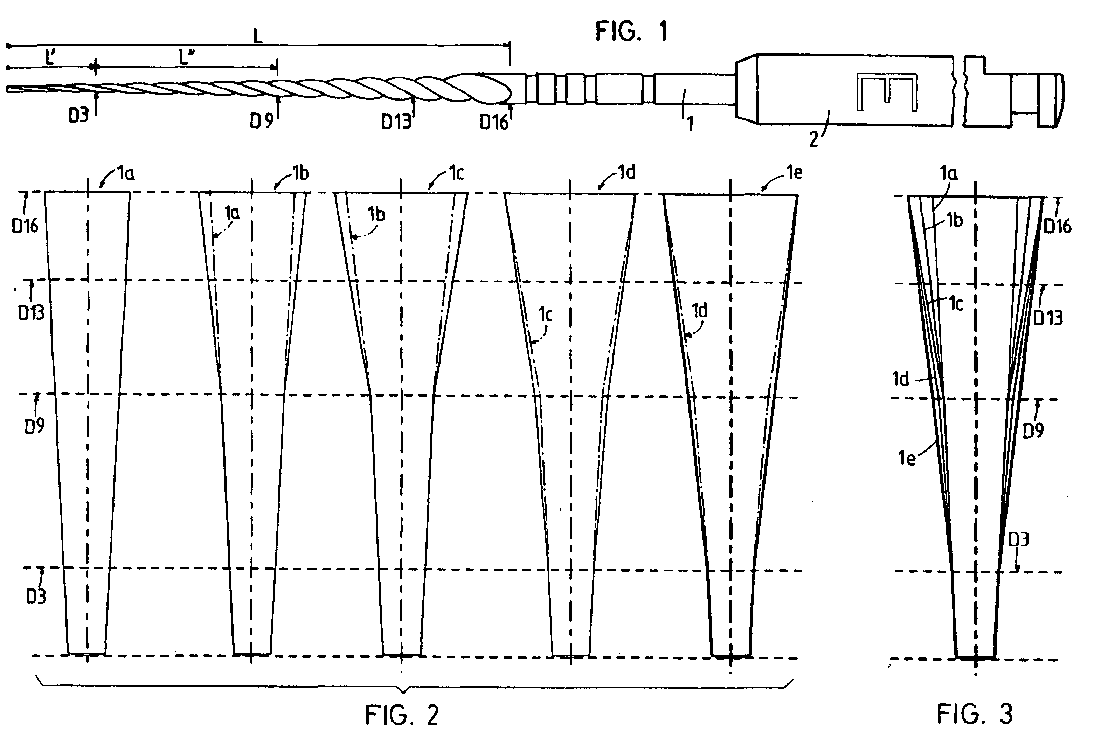

L'instrument représenté à la fig. 1 comprend une tige de section circulaire 1, en un alliage nickel-titane, emmanchée, à sa partie postérieure, dans un manche 2 destiné à s'engager dans une pièce d'angle assurant l'entraînement mécanique de l'instrument.

La tige 1 est effilée, sa partie antérieure, indiquée en L, présentant deux gorges hélicoïdales 3 à lèvre coupante. A l'extrémité de l'instrument, sur une longueur indiquée par L', de 3 mm environ, se terminant en un point indiqué par D₃, exprimant le diamètre de l'instrument en ce point, la lèvre coupante des gorges hélicoïdales 3 a été supprimée de façon que, sur cette longueur, l'instrument ne soit pas coupant et que les gorges n'aient pour effet que d'éliminer les déchets du matériau dentinaire détaché par l'instrument. Le nombre des gorges à arêtes coupantes pourra être supérieur à deux.

Dès le point D₉ situé à une distance L" du point D₃, de 6mm, c'est-à-dire à une distance de 9mm de la pointe de l'instrument, la conicité de celui-ci augmente très légèrement comme le montre le premier instrument, indiqué par 1a, de la fig. 2.

L'instrument conserve alors cette nouvelle conicité jusqu'au point D₁₆ qui marque la fin de sa partie active L.

Le deuxième instrument du jeu de 1a fig. 2, désigné par 1b, se distingue du premier par le fait que l'angle d'ouverture de la conicité de sa partie située entre les points D₉ et D₁₆ augmente plus que pour l'instrument 1a.

Il en est de même du troisième instrument, désigné par 1c, du jeu de la fig. 2.

La différence de conicité de 1a partie postérieure de la longueur active des instruments, à partir de leur point D₉, apparaît clairement à 1a fig. 2 où 1e profil de l'instrument 1a a été indiqué en traits mixtes sur l'instrument 1b, et 1e profil de l'instrument 1b a été indiqué sur l'instrument 1c.

La figure 2 montre également que la conicité de la partie antérieure des instruments 1a, 1b et 1c, entre la pointe de ces instruments et leur diamètre D9, est la même pour ces trois instruments.

Quant au quatrième instrument du jeu, désigné par 1d, la conicité de sa partie antérieure, avant le diamètre D9, augmente par rapport à celle de l'instrument 1c. Il en est de même du cinquième et dernier instrument du jeu, désigné par 1e, dans lequel la conicité de ses parties antérieure et postérieure augmente par rapport à l'instrument 1c.

Ce jeu d'instruments permet au praticien qui a réalisé manuellement la première étape de l'alésage, dite de cathétérisme, consistant à engager dans le canal un instrument très fin, jusqu'au foramen apical, d'utiliser ensuite, successivement, les instruments 1a à 1e du jeu, entraînés mécaniquement, en commençant par l'instrument 1a et en terminant par l'instrument 1e.

Cette utilisation successive des différents instruments du jeu permet d'effectuer un travail progressif, chaque instrument élargissant une partie spécifique du canal radiculaire tout en étant guidé jusqu'à l'apex par sa partie terminale antérieure non coupante, ce qui permet d'éviter des déviations et des déports par rapport à la courbure naturelle du canal originel.

C'est la partie coronaire du canal qui est alésée la première, ce qui assure un dégagement optimal des débris dentinaires et des conditions de travail optimales pour l'instrument suivant. Incidemment, le risque d'infection par l'apport de tissu dentinaire carié à l'apex est ainsi fortement réduit. Puis c'est la partie médiane de la dent qui est alésée et enfin sa partie apicale.

L'extrémité de la partie apicale n'est pas inutilement alésée grâce au fait que la pointe de l'instrument dont la conicité sera de 2 % par exemple, sur une longueur de 3 mm, est dépourvue d'arêtes coupantes.

Le présent jeu d'instruments qui permet sa mise en oeuvre conduit à la réalisation d'un canal plus ouvert et surtout plus régulier, ce qui assure des conditions d'obturation du canal qui sont optimales. Le passage du dernier instrument 1e réalise un alésage de finition.

Le canal radiculaire ainsi alésé ne présente aucune solution de continuité le long de sa surface, formant des "escaliers", comme c'est le cas lorsque les instruments connus, notamment les instruments dits du type de Gate, sont utilisés.

Dans l'exemple décrit et représenté, la conicité des instruments du jeu ne varie qu'en un seul point, à la hauteur du diamètre D₉. On pourra cependant prévoir le cas où la conicité variera en plus d'un point, par exemple à la hauteur du diamètre D₉ et du diamètre D₁₃ situé à 13 mm de la pointe de l'instrument.

De même, la forme évasée ou en trompette de l'instrument pourra être réalisée par une variation continue de l'angle d'ouverture de son cône. Dans ce cas, la génératrice de sa surface ne sera pas constituée par une ligne brisée, comme dans le cas de l'exemple décrit et représenté, mais par une courbe tendant vers l'axe central de l'instrument, au-delà de la pointe de ce dernier.

Dans la pratique, la conicité de la partie antérieure de l'instrument, située en avant du diamètre D₉ de celui-ci, sera de l'ordre de 2%, la conicité de la partie postérieure pouvant aller de 4,5 à près de 6%.

Le nombre des instruments du jeu pourra être supérieur ou inférieur à cinq, cas de l'exemple décrit et représenté.

## Revendications

1. Jeu d'au moins cinq instruments pour l'alésage des canaux radiculaires dentaires dans lequel chaque instrument (1a à 1e) comprend une tige effilée (1) présentant, sur au moins une partie de sa longueur (2), constituant sa partie active, au moins une arête hélicoïdale de coupe, cette tige (1) présentant pour tous les instruments du jeu une pointe de même diamètre et une conicité dont l'angle d'ouverture est supérieur, dans sa partie postérieure (D9 - D16) proche du manche de l'instrument, à l'angle d'ouverture de sa partie antérieure (D3 - D9) proche de la pointe de l'instrument, **caractérisé par le fait que** les deux ou trois premiers instruments (1a, 1b, 1c) du jeu comportent une partie antérieure (D3 - D9), située entre leur pointe et leur partie postérieure (D9 - D16), de conicité identique tandis que la conicité de la partie postérieure (D9 - D16) de ces deux ou trois premiers instruments (1a, 1b, 1c) augmente d'un instrument au suivant ; et **par le fait que** la conicité de la partie antérieure (D3 - D9) des deux ou trois demiers instruments (1c, 1d, 1e) du jeu croît d'un instrument au suivant tandis que la conicité de la partie postérieure (D9 - D16) de ces deux ou trois derniers instruments (1c, 1d, 1e) du jeu décroît d'un instrument au suivant.

2. Jeu d'instruments suivant la revendication 1, **caractérisé par le fait que** la partie active de chaque instrument du jeu est formée d'au moins deux tronçons de conicité différente, l'angle d'ouverture de ces deux tronçons allant en croissant de l'extrémité antérieure de ladite partie active en direction de son extrémité postérieure.

3. Jeu d'instruments suivant la revendication 1 ou 2, **caractérisé par le fait que** chaque instrument du jeu est constitué par un corps de révolution dont la génératrice est une courbe dont la tangente, en tout point, forme, avec l'axe longitudinal de l'instrument, un angle qui va en croissant à partir de l'extrémité antérieure de la partie active de l'instrument en direction de son extrémité postérieure.

4. Jeu d'instruments suivant l'une des revendications 1 à 3, **caractérisé par le fait que** la partie terminale antérieure de chaque instrument, démunie d'arête de coupe, présente au moins une gorge hélicoïdale à lèvre non coupante destinée à l'évacuation des déchets du matériel dentinaire détaché par l'instrument au cours du travail de celui-ci.

## Patentansprüche

1. Satz von mindestens fünf Instrumenten für die Bohrung der Zahnwurzelkanäle, in welchem jedes Instrument (1a bis 1e) eine verjüngte Stange (1) aufweist, die, auf mindestens einem Teil ihrer Länge (2), der ihren aktiven Teil darstellt, mindestens eine spiralförmige, schneidende Kante besitzt, wobei diese Stange (1) für alle Instrumente des Satzes eine Spitze gleichen Durchmessers besitzt und eine Konizität, deren Öffnungswinkel in ihrem hinteren Teil (D9 - D16) nahe am Griff des Instruments größer ist als der Öffnungswinkel in ihrem vorderen Teil (D3 - D9) nahe an der Spitze des Instruments, **dadurch gekennzeichnet, daß** die ersten zwei oder drei Instrumente (1a, 1b, 1c) des Satzes einen zwischen ihrer Spitze und ihrem hinteren Teil (D9 - D16) befindlichen vorderen Teil (D3 - D9) aufweisen, der eine identische Konizität besitzt, während die Konizität des hinteren Teils (D9 - D16) dieser ersten zwei oder drei Instrumente (1a, 1b, 1c) von einem Instrument zum nächsten anwächst; und dadurch, daß die Konizität des vorderen Teils (D3 - D9) der letzten zwei oder drei Instrumente (1c, 1d, 1 e) des Satzes von einem Instrument zum nächsten wächst, während sich die Konizität des hinteren Teils (D9 - D16) dieser letzten zwei oder drei Instrumente (1c, 1d, 1e) des Satzes von einem Instrument zum nächsten vermindert.

2. Satz von Instrumenten gemäß dem Anspruch 1, **dadurch gekennzeichnet, daß** der aktive Teil eines jeden Instruments des Satzes aus mindestens zwei Abschnitten verschiedener Konizität geformt ist, wobei der Öffnungswinkel dieser zwei Abschnitte von dem vorderen Ende des benannten aktiven Teils in Richtung seines hinteren Endes anwächst.

3. Satz von Instrumenten gemäß dem Anspruch 1 oder 2, **dadurch gekennzeichnet, daß** jedes Instrument des Satzes aus einem Umlaufkörper besteht, dessen Mantellinie eine Kurve ist, deren Tangente an jedem Punkt mit der longitudinalen Achse des Instruments einen Winkel bildet, der vom vorderen Ende des aktiven Teils des Instruments in Richtung seines hinteren Endes anwächst.

4. Satz von Instrumenten gemäß einem der Ansprüche 1 bis 3, **dadurch gekennzeichnet, daß** das vordere Endstück eines jeden Instruments, einer schneidenden Kante entbehrend, zumindest eine spiralförmige Verengung mit einer nicht schneidenden Kehle aufweist, die für die Abfuhr der Abfälle des vom Instrument im Laufe seiner Arbeit losgelösten Zahnmaterials geeignet ist.

## Claims

1. Set of at least five instruments for the boring of the dental channels of the roots in which each instrument (1a to 1e) comprises a tapered bar (1) presenting, at least at one part of its length (2) constituting its active part, at least one helicoidal cutting edge, this bar (1) presenting for all instruments of the set a point of the same diameter and a conical shape the opening angle of which is bigger at its back part (D9 - D16) near the handle of the instrument than the opening angle at its front part (D3 - D9) near the point of the instrument, **characterised by** the fact that the first two or three instruments (1a, 1b, 1c) of the set comprise a front part (D3 - D9), situated between their point and their back part (D9 - D16), of identical conical shape whereas the conical shape of the back part (D9 - D16) of these first two or three instruments (1a, 1b, 1c) increases from one instrument to the following; and by the fact that the conical shape of the front part (D3 - D9) of the last two or three instruments (1c, 1d, 1e) of the set increases from one instrument to the following whereas the conical shape of the back part (D9 - D16) of these last two or three instruments (1c, 1d, 1e) of the set decreases from one instrument to the following.

2. Set of instruments according to claim 1, **characterised by** the fact that the active part of each instrument of the set is formed of at least two sections of different conical shape, the opening angle of these two sections increasing from the front end of said active part in the direction of its back end.

3. Set of instruments according to claim 1 or 2, **characterised by** the fact that each instrument of the set is made up of a body of revolution the side of which is a curve with a tangent forming at each point with the longitudinal axis of the instrument an angle which increases from the front end of the active part of the instrument in the direction of its back end.

4. Set of instruments according to one of the claims 1 to 3, **characterised by** the fact that the terminating front part of each instrument, without a cutting edge, presents at least one helicoidal constriction with a non cutting lip adapted for the evacuation of waste of dental material detached by the instrument during its working process.
